(19) Europäisches Patentamt
European Patent Office
Office européen des brevets

(11) Publication number: 0 171 233
B1

(12) **EUROPEAN PATENT SPECIFICATION**

(45) Date of publication of patent specification: **18.07.90**

(51) Int. Cl.$^5$: **C 08 F 299/04**, H 01 J 29/87

(21) Application number: **85305284.3**

(22) Date of filing: **24.07.85**

# (54) Unsaturated polyester resin composition for treating cathode-ray tube.

(30) Priority: **10.08.84 JP 167453/84
21.12.84 JP 271188/84
21.12.84 JP 271189/84
22.01.85 JP 10687/85**

(43) Date of publication of application:
**12.02.86 Bulletin 86/07**

(45) Publication of the grant of the patent:
**18.07.90 Bulletin 90/29**

(84) Designated Contracting States:
**DE FR GB**

(56) References cited:
**EP-A-0 089 811
DE-A-2 910 857
FR-A-2 295 558
FR-A-2 561 439
US-A-2 939 854
US-A-4 259 457**

(73) Proprietor: **Hitachi Chemical Co., Ltd.
1-1, Nishishinjuku 2-chome
Shinjuku-ku, Tokyo 160 (JP)**

(72) Inventor: **Tanaka, Kazuyuki
3-B-103, Nishinarusawacho-3-chome
Hitachi-shi (JP)**
Inventor: **Iwami, Etsuji
23-27, Namekawahoncho-3-chome
Hitachi-shi (JP)**
Inventor: **Fujii, Tadashi
2223-22, Ogitsucho
Hitachi-shi (JP)**
Inventor: **Izumi, Hirohumi
1484-61, Kitacho Otsumachi
Kitaibaraki-shi (JP)**

(74) Representative: **Goldin, Douglas Michael et al
J.A. KEMP & CO. 14, South Square Gray's Inn
London WC1R 5EU (GB)**

EP 0 171 233 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

BACKGROUND OF THE INVENTION

This invention relates to an unsaturated polyester resin composition for treating cathode-ray tubes.

Since the inside of a cathode-ray tube is kept at a high vacuum, the cathode-ray tube has the hazard of being crushed by an impact or the like, namely, implosion. Therefore, the cathode-ray tube is subjected to explosion-preventive treatment in order to prevent scattering of glass accompanying the implosion.

As methods for the explosion-preventive treatment, various methods are employed. For example, an explosion-preventive treatment method having the construction shown in the attached drawing which comprises adhering front glass to the face-plate portion of a cathode-ray tube by using a resin composition for treating cathode-ray tube is effective. In detail, this method comprises surrounding and holding, in contiquity with a face-plate portion 2 of cathode-ray tube, front glass 3 having the same curvature and size as the face-plate portion 2 with a tape 4 at a very short distance from the face-plate portion, filling this gap with a resin composition for explosion preventive treatment 5, and thereby forming an explosion-proof cathode-ray tube 6.

As the resin composition for explosion preventive treatment, epoxy resins and unsaturated polyester resins have heretofore been used. However, they have both merits and demerits, and in the existing circumstances, there has not yet been obtained any resin composition having both characteristics and workability which are satisfactory as those of the resin composition for explosion preventive treatment.

For example, when an epoxy resin is used, it has a high adhesive strength and hence is advantageous for adhering front glass to a face-plate portion, but it has a coloring property with the lapse of time, so that when it is used in a cathode-ray tube in which color is regarded as important, such as a color cathode-ray tube, the sharpness and brightness are lowered. Moreover, since as compared with unsaturated polyester resins, epoxy resins increase in viscosity immediately after being mixed with a curing agent, they not only have a short period of usability and poor defoaming properties, but also requires mixing and injecting apparatuses; thus they are disadvantageous in workability.

On the other hand, when an unsaturated polyester resin is used, its viscosity generally is as relatively low as several poises and does not increase until immediately before gelation, therefore its mixing with a curing agent and its injection into the gap between the face-plate portion of a cathode-ray tube and front glass are easy. Furthermore, it is advantageous, for example, in that since its viscosity is low and hence its pot life (period of usability) can freely be adjusted, it is easily defoamed at the time of mixing or injection. However, if the proportion of the curing agent of several percents based on the resin is different from the predetermined condition, distortion is locally caused at the time of curing in some cases. This distortion results in lens effect, so that when the cathode-ray tube is operated, surface defects such as a striped pattern, luminescent spots and the like appear on a screen. Since these surface defects impare the value of the cathode-ray tube, sufficient care should be taken in the mixing proportion of the curing agent. The surface defects such as a striped pattern, luminescent spots and the like are caused also by rapid heating or temperature unevenness of a curing oven, therefore sufficient care should be taken in curing conditions such as temperature conditions and the like.

SUMMARY OF THE INVENTION

This invention has been made in order to remove the surface defects, i.e., the defects in the prior art while making the most of the advantages of unsaturated polyester resins, and aims at providing an unsaturated polyester resin composition for treating cathode-ray tubes and having low viscosity and high transparency and adhesiveness, and is free from occurrence of the surface defects due to distortion at the time of curing.

This invention provides a liquid unsaturated polyester resin composition for treating cathode-ray tubes comprising

(I) an unsaturated polyester obtained by reacting an acid component comprising as its main constituent an unsaturated dibasic acid and/or an acid anhydride thereof with an alcohol component and having a molecular weight of 500 to 8000 per mole of unsaturated group.

(II) a styrene monomer and/or a derivative thereof, and

(III) at least one polymerizable unsaturated compound selected from the group consisting of

(i) acrylonitrile, itaconic acid and citraconic anhydride,

(ii) monoesters and diesters of unsaturated dibasic acids, and

(iii) acrylic acid, methacrylic acid and their derivatives, and

the component (I) being dissolved in the components (II) and (III) in the range of

$$(b)/\{(a) + (c)\} = 1/10 \text{ to } 10/1$$

wherein (a) is the number of moles of unsaturated groups in the component (I); (b) is the number of moles of unsaturated groups in the component (II); and (c) is the number of moles of unsaturated groups in the component (III).

BRIEF DESCRIPTION OF THE DRAWING

The attached drawing is a sectional schematic illustration of an explosion-proof cathode-ray tube.

DESCRIPTION OF THE PREFERRED EMBODIMENTS

The unsaturated dibasic acid and/or an acid anhydride thereof used as the main constituent of the acid component for preparing the unsaturated polyester (I) includes maleic acid, fumaric acid, itaconic acid, citraconic acid and maleic anhydride. These may be used in combination of two or more of them.

The acid component can, if necessary, contain a polybasic acid. Examples of the polybasic acid include phthalic acid, phthalic anhydride, isophthalic acid, terephthalic acid, trimellitic acid, trimellitic anhydride, succinic acid, azelaic acid, adipic acid, sebacic acid, tetrahydrophthalic acid, tetrahydrophthalic anhydride, hexahydrophthalic acid, hexahydrophthalic anhydride, endomethylenetetrahydrophthalic anhydride, anthracene-maleic anhydride adduct, rosin-maleic anhydride adduct, Het Acid and anhydride thereof, chlorinated polybasic acids such as tetrachlorophthalic acid, tetrachlorophthalic anhydride and the like, brominated polybasic acids such as tetrabromophthalic acid, tetrabromophthalic anhydride. These may be used as a mixture thereof.

Further, the acid component may also contain 3,6-endomethylene-1,2,3,6-tetrahydrophthalic anhydride or 3,6-endomethylene-1,2,3,6-tetrahydrophthalic acid.

3,6-Endomethylene-1,2,3,6-tetrahydrophthalic anhydride is obtained for example, by pyrolyzing dicyclopentadiene at 170° to 180°C into cyclopentadiene, and subjecting it to Diels-Alder reaction with maleic anhydride at 20° to 40°C for 2 hours. Such a compound is commercially available under the trade name of HIMIC anhydride manufactured by Hitachi Chemical Company, Ltd.

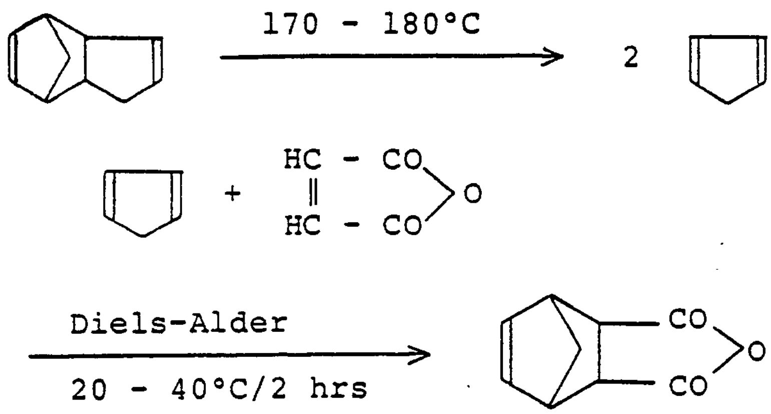


3,6-Endomethylene-1,2,3,6-tetrahydrophthalic acid is obtained by using maleic acid in place of the above maleic anhydride. These compounds are well known.

As the alcohol component for preparing the unsaturated polyester (I), there can be used dihydric alcohols such as ethylene glycol, diethylene glycol, propylene glycol, dipropylene glycol, 1,3-butanediol, 1,4-butanediol, 2,3-butanediol, 1,5-pentanediol, 1,6-hexanediol, triethylene glycol, neopentyl glycol; trihydric alcohols such as glycerin, trimethylolethane, trimethylolpropane; tetrahydric alcohols such as pentaerythritol.

There can also be used halogenated alcohols such as chlorides, bromides of the various alcohols described above.

A process for producing the unsaturated polyester by reacting the aforesaid acid component with the aforesaid alcohol component is conducted mainly by condensation reaction and by elimination of low-molecular-weight compounds from the system.

As a reactor for carrying out this reaction, there is selected one which is inert toward the acid component, such as a reactor of glass or stainless steel, and it is preferable to select a reactor equipped with a stirrer, a practionating device for preventing the alcohol component from being distilled out by azeotropy of water and the alcohol component, a heating device for raising the temperature of the reaction system, a temperature-controlling circuit for the heating device, and a device for blowing in nitrogen gas.

As to the reaction conditions, it is preferable to carry out the reaction at a temperature of 150°C or higher at which the reaction rate is sufficiently high. For preventing coloring by oxydation reaction at high temperatures, a reaction temperature in the range of 160°C to 210°C is more preferable.

For preventing side reactions due to oxidation at high temperatures, it is preferable to carry out the synthesis while introducing an inert gas such as nitrogen or carbon dioxide.

The reaction is allowed to proceed by heating the system composed of a mixture of the acid component and the alcohol component, and eliminating produced low-molecular-weight compounds such as condensation water from the system. The elimination is conducted preferably by spontaneous distilling-out by introduction of an inert gas or distilling-out under reduced pressure. When the low-molecular-weight compounds to be distilled out have a high boiling point, a high vacuum is needed.

Further, for accelerating distilling-out of the low-molecular-weight compounds such as condensation water, it is also possible to add a solvent such as toluene or xylene to the system as a azeotropic component to conduct spontaneous distilling-out.

The degree of progress of the reaction can be known generally by, for example, measuring the amount of a distillate produced by the reaction, quantitatively determining the terminal functional group, or measuring the viscosity of the reaction system.

The unsaturated polyester used in this invention has a molecular weight of 500 to 8,000, preferably 1,000 to 4,000 per mole of unsaturated groups.

Such an unsaturated polyester can be produced by a conventional process by adjusting the mixing ratios of the materials.

When the molecular weight per mole of unsaturated group of the unsaturated polyester is less than 500, the crosslinking density of the resulting cured product of resin is increased. Accordingly, the shrinkage percentage of the resin is increased, and the cured product of resin becomes inflexible and decreases in softness, therefore peeling-off tends to be caused in the front glass or the face-plate portion of cathode-ray tube by heat or impact, and reclamation of substandard products becomes impossible.

When the molecular weight per mole of unsaturated group of the unsaturated polyester exceeds 8,000, no sufficient crosslinking occurs at the time of curing of the resin, the curing time is increased, the workability is lowered, and the number of luminescent spots is increased. Moreover, there is caused copolymerization of the styrene and/or a derivative thereof and the polymerizable unsaturated compound such as acrylic acid, methacrylic acid and/or a derivative thereof, or copolymerization of only vinyl monomers, so that the cured resin becomes whitely turbid and becomes unusable as an article of commerce for cathode-ray tubes.

Further, since no sufficient crosslinking occurs, a lowering of adhesive strength between the front glass and the face-plate of cathode-ray tube is caused under the conditions of high temperature and humidity (85°C, 90% R.H.) and is responsible for peeling-off.

The styrene monomer and/or a derivative thereof (II) in which the unsaturated polyester (I) thus obtained is dissolved include styrene, chlorostyrene, dichlorostyrene, p-methylstyrene, α-methylstyrene, vinyltoluene, divinylbenzene. These are used alone or in combination.

As the polymerizable unsaturated compound (III), there is used at least one member selected from the group consisting of (i) acrylonitrile, itaconic acid and citraconic anhydride.

As the polymerizable unsaturated compound (III), there can also be used at least one compound selected from the group consisting of (ii) monoesters and diesters of unsaturated dibasic acids.

As the monoesters and diesters of unsaturated dibasic acids, there can be used, for example, various esters such as monomethyl fumarate, dimethyl fumarate, monomethyl maleate, dimethyl maleate, monoethyl fumarate, diethyl fumarate, monoethyl maleate, diethyl maleate, monopropyl fumarate, dipropyl fumarate, monopropyl maleate, dipropyl maleate, monobutyl fumarate, dibutyl fumarate, monooctyl fumarate, dioctyl fumarate, monomethyl itaconate, dimethyl itaconate, diethyl itaconate, monoethyl itaconate, monobutyl itaconate, dibutyl itaconate, monopropyl itaconate and dipropyl itaconate.

These esters can be used alone or in combination.

As the polymerizable unsaturated compound (III), there can also be used at least one compound selected from the group consisting of (iii) acrylic acid, methacrylic acid and their derivatives.

As the derivatives of acrylic acid and methacrylic acid, there can be used, for example, allyl acrylate, benzyl acrylate, butyl acrylate, ethyl acrylate, methyl acrylate, propyl acrylate, hydroxyethyl acrylate, methyl methacrylate, ethyl methacrylate, butyl methacrylate, propyl methacrylate, allyl methacrylate, benzyl methacrylate, hydroxyethyl methacrylate, dodecyl methacrylate, octyl methacrylate, pentyl methacrylate.

In this invention, when there are taken the number of moles of unsaturated groups in the unsaturated polyester (I) as (a), that of unsaturated groups in the styrene monomer and/or a derivative thereof (II) as (b), and that of unsaturated groups in the polymerizable unsaturated compound (III) as (c), the unsaturated polyester is dissolved in the styrene monomer and/or a derivative thereof and the polymerizable unsaturated compoud (III) in the range:

$$(b)/\{(a) + (c)\} = 1/10 - 10/1.$$

When the polymerizable unsaturated compound is (i), a range:

$$(b)/\{(a) + (c)\} = 5/10 - 10/1$$

is preferred.

When $(b)/\{(a) + (c)\}$ exceeds 10/1, luminescent spots are increased, resulting in an increase of fraction defective. When $(b)/\{(a) + (c)\}$ is less than 5/10, the viscosity is increased, resulting in a lowering of defoaming properties and great prolongation of curing, therefore the workability is greatly lowered, so that there is strengthened the tendency that surface defects due thereto such as foams, resin leakage, injection shortage are caused.

In the case of the polymerizable unsaturated compound being (ii), when the ratio (b)/{(a) + (c)} is more than 10/1, the mixing ratio of curing agent differs from a predetermined condition in curing the unsaturated polyester resin composition for the treatment, and cure distortion is easily caused by the unevenness of the temperature of curing oven at the time of curing and by the difference between the temperature of the unsaturated polyester resin composition containing the curing agent and the temperature of the front glass set of a cathode-ray tube into which said composition is to be casted. Therefore, a striped pattern or luminescent spots appear on the screen, so that the commercial value is lost.

On the other hand, when the ratio (b)/{(a) + (c)} is less than 1/10, the viscosity-lowering effect of the styrene monomer and/or a derivative thereof which have a low viscosity is lost, therefore the workability is lowered. For example, casting of the unsaturated polyester resin composition becomes very difficult, and defoaming at the time of mixing or casting a curing agent is deteriorated. The ratio (b)/{(a) + (c)} is more preferably in the range of 1/2 – 5/1. In the case of above (ii), although the unsaturated polyester (I) may be dissolved in a mixture of the styrene monomer and/or a derivative thereof (II) and the monoester and/or diester of an unsaturated dibasic acid, it is also possible to dissolve the unsaturated polyester in the styrene monomer and/or a derivative thereof previously and add thereto the monoester and/or diester of an unsaturated dibasic acid. Further, it is also possible to dissolve the unsaturated polyester in the monoester and/or diester of an unsaturated dibasic acid and add thereto styrene and/or a derivative thereof.

In the case of above (iii), although the unsaturated polyester (I) may be dissolved in a mixture of styrene and/or a derivative thereof (II) and acrylic acid, methacrylic acid or a derivative thereof, it is also possible to dissolve the unsaturated polyester in styrene and/or a derivative thereof previously and add thereto acrylic acid, methacrylic acid or a derivative thereof. Further, it is also possible to dissolve the unsaturated polyester in acrylic acid, methacrylic acid or a derivative thereof and add thereto styrene and/or a derivative thereof.

The unsaturated polyester resin composition thus prepared may, if necessary, contain polymerization inhibitors such as hydroquinone, pyrocatechol, 2,6-di-tert-butylparacresol, p-benzoquinone, di-t-butylcatechol, hydroquinone monomethyl ether, t-butylcatechol, mono-t-butylhydroquinone. Although the amount of the polymerization inhibitor added is not critical, it is preferably 0 to 0.03 part by weight per 100 parts by weight of the unsaturated polyester composition.

Organic peroxides used for curing the resin composition of this invention include, for example, methyl ethyl ketone peroxide, cyclohexanone peroxide, cumene hydroperoxide, dicumyl peroxide, acetylacetone peroxide, benzoyl peroxide, lauroyl peroxide, cumene peroxide. These compounds may be used alone or in combination. Although the amount of the organic peroxide added is not critical, it is preferably 0.1 to 2 parts by weight per 100 parts by weight of the unsaturated polyester resin composition. Further, if necessary, a cure accelerator can be incorporated into said resin composition. The cure accelerator decomposes the organic peroxide by redox reduction to facilitate production of an active radical. As the cure accelerator, there can be used metallic soaps such as cobalt naphthenate, vanadium naphthenate, cobalt octanoate; quaternary ammonium salts such as dimethylbenzylammonium chloride; β-diketones such as acetylacetone; amines such as dimethylaniline, diethylaniline, toluidine, N-ethyl-metatoluidine, triethanolamine.

The unsaturated polyester resin composition of this invention can also be light-cured by using as a light cure accelerator, for example, diphenyl disulfide, benzoin, benzoin methyl ether, benzoin ethyl ether, benzoin n-propyl ether, benzoin isopropyl ether, benzoin sec-butyl ether, benzoin-2-pentyl ether, benzoin cyclohexyl ether, dimethylbenzyl ketal.

The above-mentioned organic peroxides and these high cure accelerators may be simultaneously used.

The resin composition of this invention may, if necessary, contain dyes, plasticizers, ultraviolet ray absorbing agents, and the like.

The unsaturated polyester resin composition of this invention is casted into the gap between the front glass and face-plate portion of a cathode-ray tube such as a Braun tube of television, a display tube for computer and cured. Methods for the curing include ultraviolet ray curing, infrared curing, electron beams curing, hot setting, cold setting. These methods may be employed alone or in combination.

This invention is illustrated by way of the following Examples, in which all percents and parts are by weight unless otherwise specified.

### Referential Example 1

In a stream of nitrogen, 15 moles of maleic anhydride, 50 moles of adipic acid, 35 moles of tetrahydrophthalic anhydride, 60 moles of diethylene glycol and 45 moles of propylene glycol were reacted at 220°C for 12 hours to obtain an unsaturated polyester ($I_1$) having an acid value of 28 and a molecular weight of 1,400 per mole of unsaturated group. In 25 parts of a styrene monomer containing 0.01 part of hydroquinone was dissolved 75 parts of the unsaturated polyester ($I_1$), after which 0.1 part of 6% cobalt naphthenate was added to obtain an unsaturated polyester resin composition ($A_1$).

### Example 1

In 93 parts of the unsaturated polyester resin composition ($A_1$) obtained in Referential Example 1 was dissolved 7 parts of acrylonitrile to obtain an unsaturated polyester resin composition ($B_1$).

Example 2

In 95 parts of the unsaturated polyester resin composition ($A_1$) obtained in Referential Example 1 was dissolved 5 parts of itaconic acid with heating to obtain an unsaturated polyester resin composition ($C_1$).

Example 3

In 95 parts of the unsaturated polyester resin composition ($A_1$) obtained in Referential Example 1 was dissolved 5 parts of citraconic anhydride with heating to obtain an unsaturated polyester resin composition ($D_1$).

Example 4

In 20 parts of a styrene monomer containing 0.01 parts of hydroquinone was dissolved 80 parts of the unsaturated polyester ($I_1$) obtained in Referential Example 1, and 10 parts of acrylonitrile was further dissolved therein to obtain an unsaturated polyester resin composition ($E_1$).

Comparative Example 1

In a stream of nitrogen, 50 moles of maleic anhydride, 50 moles tetrahydrophthalic anhydride, 60 moles of propylene glycol and 50 moles of ethylene glycol were reacted at 200°C for 10 hours to obtain an unsaturated polyester having an acid value of 35 and a molecular weight of 400 per mole of unsaturated group. In 30 parts of a styrene monomer containing 0.02 part of hydroquinone and 0.1 part of 6% cobalt naphthenate both in solution was dissolved 70 parts of the unsaturated polyester to obtain an unsaturated polyester resin composition ($F_1$).

To 100 parts of each of the unsaturated polyester resin composition ($A_1$), ($B_1$), ($C_1$), ($D_1$), ($E_1$) and ($F_1$) obtained in Referential Example 1, Examples 1 to 4 and Comparative Example 1, respectively was added 1 part of 55% methyl ethyl ketone peroxide, and the resulting composition was poured into the gap of 3 mm between the face-plate portion and front glass of an explosion-unprotected cathode-ray tube which had been equipped with the front glass as shown in the attached drawing and had been preheated, through an opening provided in a tape attached to the side of the cathode-ray tube, and cured at 80°C for 2 hours. After cooling, the number of luminant spots formed was visually judged.

After the luminant spot judgement, the cathode-ray tube was heated at 149°C for 48 hours, and peeling-off was visually observed. The results obtained are shown in Table 1.

Luminant spot judgement

| | | |
|---|---|---|
| ◎: | the number of luminant spots formed | 0—10 |
| o: | the number of luminant spots formed | 11—20 |
| △: | the number of luminant spots formed | 21—50 |
| x: | the number of luminant spots formed | 51 or more |

Judgement on peeling-off by heating at 148°C for 48 hours

| | |
|---|---|
| o: | no peeling-off |
| x: | peeled off |

Table 1

| | | Referential Example 1 | Example 1 | Example 2 | Example 3 | Example 4 | Comparative Example 1 |
|---|---|---|---|---|---|---|---|
| Recipe (part) | Unsaturated polyester | 75 | 70 | 71 | 71 | 72 | 70 |
| | Styrene | 25 | 23 | 24 | 24 | 18 | 30 |
| | Acrylonitrile | - | 7 | - | - | 10 | - |
| | Itaconic acid | - | - | 5 | - | - | - |
| | Citraconic anhydride | - | - | - | 5 | - | - |
| Unsaturated polyester resin | | ($A_1$) | ($B_1$) | ($C_1$) | ($D_1$) | ($E_1$) | ($F_1$) |
| Number of moles (mole) | (a) | 0.05 | 0.05 | 0.05 | 0.05 | 0.05 | 0.19 |
| | (b) | 0.24 | 0.22 | 0.23 | 0.23 | 0.17 | 0.29 |
| | (c) | - | 0.13 | 0.04 | 0.05 | 0.19 | - |
| | (b)/{(a) + (c)} | 4.8 | 1.2 | 2.6 | 2.3 | 0.7 | 1.5 |
| Luminant spots | | x | o | o | o | ◎ | Δ |
| Peeling-off by heating at 148°C for 48 hrs. | | o | o | o | o | o | x |

As is evident from Table 1, when at least one compound selected from the group consisting of acrylonitrile, itaconic acid and citraconic anhydride is used as the polymerizable unsaturated compound, inferiority due to luminant spots heretofore formed in cathode-ray tubes is reduced to 1/10 or less by the resulting unsaturated polyester resin composition for explosion protection treatment of cathode-ray tube, whereby the working process can be greatly shortened.

Example 5

In a stream of nitrogen, 0.15 mole of maleic anhydride, 0.85 mole of 3,6-endomethylene-1,2,3,6-tetrahydrophthalic anhydride (HIMIC anhydride, a trade name, manufactured by Hitachi Chemical Company Ltd.) and 1.1 moles of diethylene glycol were reacted with stirring at 205°C for 10 hours to obtain an unsaturated polyester ($I_2$) having an acid value of 24 and a molecular weight of 2,530 per mole of unsaturated group.

In 75 parts of the unsaturated polyester ($I_2$) was dissolved 25 parts of styrene, and 0.005 part of hydroquinone and 0.05 part of cobalt naphthenate (manufactured by Dainippon Ink and Chemicals, Inc., metal content 6%) were added thereto to obtain an unsaturated polyester resin composition ($A_2$) having a viscosity of 0.62 Pas (6.2 poises) (25°C, Gardner-Holdt bubble viscometer). In 92 parts of the unsaturated polyester resin composition ($A_2$) obtained was dissolved 8 parts of diethyl fumarate to obtain an unsaturated polyester resin composition ($B_2$) having a viscosity of 0.38 Pas (3.8 poises) (25°C, Gardner-Holdt bubble viscometer). A composition prepared by adding 1 part of methyl ethyl ketone peroxide and 45% of dimethyl phthalate, manufactured by Nippon Oils and Fats Co., Ltd.) was poured into the gap of 3 mm between the face-plate portion 2 35.6 cm (14 inches) and front glass 3 of the explosion-unproof cathode-ray tube shown in the attached drawing through an opening provided in a tape attached to the side of the cathode-ray tube, and cured at 80°C for 2 hours.

After cooling, the number of luminant spots was visually judged. After the luminant spot judgement, the cathode-ray tube was heated at 149°C for 48 hours, and peeling-off was visually observed. The results obtained are shown in Table 2.

Example 6

In 90 parts of the unsaturated polyester resin composition ($A_2$) obtained in Example 5 was dissolved 10 parts of monomethyl maleate to obtain an unsaturated polyester resin composition ($C_2$) having a viscosity of 0.3 Pa·s (3.0 poises) (25°C, Gardner-Holdt bubble viscometer). This composition was cured and then tested both in the same manner as in Example 5. The results obtained are shown in Table 2.

Example 7

In a stream of nitrogen, 0.1 mole of fumaric acid, 0.7 mole of 3,6-endomethylene-1,2,3,6-tetrahydrophthalic acid, 0.2 mole of adipic acid and 1.15 moles of dipropylene glycol were reacted with stirring at 205°C for 13 hours to obtain an unsaturated polyester ($I_3$) having an acid value of 20 and a molecular weight of 2,890 per mole of unsaturated group.

In 80 parts of the unsaturated polyester ($I_3$) was dissolved 20 parts of styrene, and 0.02 part of t-butylcatechol and 0.03 part of cobalt octenoate (manufactured by Dainippon Ink and Chemicals, Inc., metal content 6%) were added thereto to obtain an unsaturated polyester resin composition ($D_2$) having a viscosity of 0.71 Pas (7.1 poises) (25°C, Gardner-Holdt bubble viscometer). In 92 parts of the unsaturated polyester resin composition ($D_2$) obtained was dissolved 8 parts of diethyl fumarate to obtain an unsaturated polyester resin composition ($E_2$) having a viscosity of 0.49 Pas (4.9 poises) (25°C, Gardner-Holdt bubble viscometer). This composition was cured and then tested both in the same manner as in Example 5. The results obtained are shown in Table 2.

Example 8

In 90 parts of the unsaturated polyester resin composition ($D_2$) obtained in Example 7 was dissolved 10 parts of monomethyl maleate to obtain an unsaturated polyester resin composition ($F_2$) having a viscosity of 0.37 Pas (3.7 poises) (25°C, Gardner-Holdt bubble viscometer). This composition was cured and then tested both in the same manner as in Example 5. The results obtained are shown in Table 2.

Comparative Examples 2 and 3

The unsaturated polyester resin composition ($A_2$) in Example 5 and the unsaturated polyester resin composition ($D_2$) in Example 7 were individually cured in the same manner as in Example 5. The former is taken as Comparative Example 2 and the latter Comparative Example 3, and the results obtained are shown in Table 2.

Comparative Example 4

In a stream of nitrogen, 0.50 mole of phthalic anhydride 0.15 mole of maleic anhydride, 0.35 mole of adipic acid, 0.3 mole of ethylene glycol and 0.8 mole of diethylene glycol were reacted with stirring at 200°C for 11 hours to obtain an unsaturated polyester ($I_3$) having an acid value of 28 and a molecular weight of 2,180 per mole of unsaturated group.

In 75 parts of the unsaturated polyester ($I_3$) was dissolved 25 parts of styrene, and 0.005 part of

hydroquinone and 0.05 part of cobalt naphthenate (metal content 6%) were added thereto to obtain an unsaturated polyester resin composition ($G_2$) having a viscosity of 0.9 Pas (9.0 poises) (25°C, Gardner-Holdt bubble viscometer). The unsaturated polyester resin composition ($G_2$) was cured in the same manner as in Example 5. It is taken as Comparative Example 4, and the results obtained are shown in Table 2.

In 92 parts of the unsaturated polyester resin composition ($G_2$) was dissolved 8 parts of diethyl fumarate to obtain an unsaturated polyester resin composition ($H_2$) having a viscosity of 6 poises (25°C, Gardner-Holdt bubble viscometer). This composition was cured in the same manner as in Example 5. It was taken as Comparative Example 5 and tested in the same manner as in Example 5. The results obtained are shown in Table 2.

Table 2

| | | Example 5 | Example 6 | Example 7 | Example 8 |
|---|---|---|---|---|---|
| Recipe (part) | Unsaturated polyester | 69 | 67.5 | 73.6 | 72 |
| | Styrene monomer | 23 | 22.5 | 18.4 | 18 |
| | Diethyl fumarate | 8 | - | 8 | - |
| | Monomethyl maleate | - | 10 | - | 10 |
| Number of moles (mole) | (a) | 0.027 | 0.027 | 0.025 | 0.025 |
| | (b) | 0.221 | 0.216 | 0.177 | 0.173 |
| | (c) | 0.046 | 0.077 | 0.046 | 0.077 |
| | (b)/{(a) + (c)} | 3.0 | 2.2 | 2.5 | 1.7 |
| Luminant spots | | ◎ | ◎ | ◎ | ◎ |
| Peeling-off by heating at 149°C for 48 hrs. | | o | o | o | o |

- cont'd -

Table 2 (cont'd)

| | | Comparative Example 2 | Comparative Example 3 | Comparative Example 4 |
|---|---|---|---|---|
| Recipe (part) | Unsaturated polyester | 69 | 73.6 | 75 |
| | Styrene monomer | 23 | 18.4 | 25 |
| | Diethyl fumarate | - | - | - |
| | Monomethyl maleate | - | - | - |
| Number of moles (mole) | (a) | 0.027 | 0.025 | 0.034 |
| | (b) | 0.221 | 0.177 | 0.240 |
| | (c) | - | - | - |
| | (b)/{(a) + (c)} | 8.2 | 7.1 | 7.1 |
| Luminant spots | | x | x | x |
| Peeling-off by heating at 149°C for 48 hrs. | | o | o | x |

As is evident from Table 2, when 3,6-endomethylene-1,2,3,6-tetrahydrophthalic anhydride or 3,6-endomethylene-1,2,3,6-tetrahydrophthalic acid is incorporated as the acid component for preparing the unsaturated polyester, and at least one member selected from the group consisting of monoesters and diesters of unsaturated dibasic acids is used as the polymerizable unsaturated compound, inferiority due to luminant spots heretofore formed in cathode-ray tubes can be reduced to 1/10 or less by the resulting unsaturated polyester composition for treating cathode-ray tube, and said composition has an improved adhesiveness to glass.

Examples 9 and 10

Into a 3-liter four-necked flask equipped with a stirring rod, condenser, nitrogen gas inlet tube and thermometer were charged the following ingredients:

| | |
|---|---|
| diethylene glycol | 1,166 parts |
| adipic acid | 584 parts |
| phthalic anhydride | 740 parts |
| fumaric acid | 116 parts. |

While introducing nitrogen gas slowly into the flask, the temperature was raised to 150°C over a period of 1.5 hours by using a mantle heater. Further, the temperature was raised to 200°C over a period of 4 hours and maintained at this temperature. An unsaturated polyester ($A_3$) having an acid value of 34 was obtained in about 10 hours. Further, the temperature was lowered to 100°C, and 1 part of hydroquinone was added as a polymerization inhibitor, after which the unsaturated polyester ($A_3$) incorporated with hydroquinone was poured into a stainless-steel vat and allowed to stand to be cooled to room temperature. The unsaturated polyester ($A_3$) thus obtained had a molecular weight of 2,440 per mole of unsaturated group.

This unsaturated polyester was dissolved in a mixed solution of styrene and dibutyl fumarate according to the recipes shown in Table 3.

To 200 parts of each of the unsaturated polyester resin compositions thus obtained were added 0.05 part of cobalt octenoate (manufactured by Dainippon Ink and Chemicals, Inc. metal content 6% by weight) and 2 parts of methyl ethyl ketone peroxide (manufactured by Nippon Oils and Fats Co., Ltd.).

On the other hand, on a 3 mm (thickness) × 250 mm × 250 mm, transparent, flat glass plate was placed, as a spacer, a silicone plate prepared by cutting the inner part in a size of 240 mm × 240 mm out of a 3 mm (thickness) × 250 mm × 250 mm silicone plate with a razor so as to leave the peripheral part, and then providing a slit in one place in the remaining peripheral part. A 3 mm (thickness) × 250 mm × 250 mm, transparent flat glass plate was placed on the spacer, and the two glass plates were fastened to each other with clamps to obtain a casting mold. The unsaturated polyester resin composition described above was poured through the slit inlet of the spacer in the casting mold.

Thereafter, the casting mold was allowed to stand in an electric oven at 80°C for 30 minutes to cure the resin, whereby an unsaturated polyester resin casted plate was obtained.

Characteristics of the casted plates thus obtained are shown in Table 3.

As Comparative Examples 5 and 6, compositions were prepared according to the recipes shown in Table 3 by using the aforesaid unsaturated polyester ($A_3$) in Examples 9 and 10, and characteristics of casted plates were evaluated in the same manner as described above.

In the case of Examples 9 and 10, no cure distortion occurred at the time of curing, and neither striped pattern nor luminant spot was observed. However, in the case of Comparative Examples 5 and 6, a striped pattern and luminant spots were obtained.

Table 3

| | | Example 9 | Example 10 | Comparative Example 5 | Comparative Example 6 |
|---|---|---|---|---|---|
| Recipe (part) | Unsaturated polyester ($A_3$) | 100 | 100 | 100 | 100 |
| | Styrene | 25 | 25 | 40 | 100 |
| | Dibutyl fumarate | 15 | 30 | - | 10 |
| Number of moles (mole) | (a) | 0.041 | 0.041 | 0.041 | 0.041 |
| | (b) | 0.240 | 0.240 | 0.385 | 0.962 |
| | (c) | 0.065 | 0.130 | - | 0.043 |
| | (b)/{(a) + (c)} | 2.3 | 1.4 | 9.4 | 11.5 |
| Cure distortion | Striped pattern | None | None | Appeared | None |
| | Luminant spot | None | None | About 100 | About 80 |
| Peeling-off | Initial stage | None | None | None | None |
| | 150°C/After 48 hrs | None | None | None | About 5% |
| Adhesive strength ($kg/cm^2$) | | 13 | 15 | 12 | 10 |

In Table 3, cure distortion was visually observed: the existence of a striped pattern was investigated, and the number of luminant spots was reckoned. Peeling-off was also visually observed, and whether it occurred or not and the area which it covered are shown (the same applied to Table 4).

The adhesive strength is shown in terms of a value obtained by placing two 20 mm × 15 mm × 3 mm glass plate one upon another in imperfect accord so as to adjust the contacted area to 15 mm × 15 mm, adhering them to each other with the unsaturated polyester resin composition (curing conditions: methyl ethyl ketone peroxide 1% by weight, curing at 80°C for 5 hours), holding the resulting assembly between spacers on both sides, applying a compression load thereto from above and below, and dividing a shearing force at which the adhesion surface was fractured, by the adhered area.

Examples 11, 12 and 13

Into a 3-liter four-necked flask equipped with the same devices as in Example 8 were charged the following ingredients:

| | |
|---|---|
| dipropylene glycol | 1,474 parts |
| adipic acid | 1,241 parts |
| maleic anhydride | 147 parts. |

While introducing nitrogen gas slowly into the flask, the temperature was raised to 150°C over a period of 1 hour by using a mantle heater. Further, the temperature was raised to 200°C over a period of 4 hours and maintained at this temperature. After about 12 hours, an unsaturated polyester ($B_3$) having an acid value of 25 was obtained.

Further, the temperature was lowered to 100°C, and 0.5 part of hydroquinone was added as a polymerization inhibitor, after which the unsaturated polyester ($B_3$) incorporated with hydroquinone was poured into a stainless-steel vat and allowed to stand to be cooled to room temperature.

The unsaturated polyester ($B_3$) thus obtained had a molecular weight of 1,710 per mole of unsaturated group.

This unsaturated polyester was dissolved in a mixed solution of styrene and diethyl fumarate according to the recipes shown in Table 4.

In Table 4 are shown characteristics of casted plates obtained by curing each of the unsaturated polyester resin compositions thus obtained, in the same manner as in Examples 9 and 10.

In Examples 11, 12 and 13, no cure distortion was observed.

Table 4

| | | Example 11 | Example 12 | Example 13 |
|---|---|---|---|---|
| Recipe (part) | Unsaturated polyester ($B_3$) | 100 | 100 | 100 |
| | Styrene | 30 | 10 | 5 |
| | Diethyl fumarate | 5 | 25 | 30 |
| Number of moles (mole) | (a) | 0.059 | 0.059 | 0.059 |
| | (b) | 0.288 | 0.096 | 0.048 |
| | (c) | 0.029 | 0.144 | 0.172 |
| | (b)/{(a) + (c)} | 3.3 | 0.59 | 0.25 |
| Cure distortion | Striped pattern | None | None | None |
| | Luminant spots | None | None | None |

Example 14

Into a 3-liter four-necked flask equipped with the same devices as in Example 9 were charged the following ingredients:

| | |
|---|---|
| diethylene glycol | 1,166 parts |
| endomethylenetetrahydrophthalic anhydride (HIMIC anhydride, a trade name, mfd. by Hitachi Chemical Company, Ltd.) | 1,509 parts |
| fumaric acid | 93 parts. |

The temperature was raised in the same manner as in Example 9 and then maintained at 200°C. After 8 hours, an unsaturated polyester having an acid value of 24 was obtained. From the mixing ratios of materials for the unsaturated polyester, its molecular weight per mole of unsaturated group was calculated to be about 3,240.

The unsaturated polyester was cooled to 120°C, and 2,000 parts thereof was dissolved in a solution prepared by mixing 400 parts of styrene, 400 parts of dibutyl fumarate and 1.5 parts of hydroquinone.

With the resulting unsaturated polyester resin were mixed 0.05 part of cobalt actenoate and 1.5 parts of methyl ethyl ketone peroxide, and the resin composition thus obtained was poured into the gap of 3 mm between the face-plate portion and front glass of an explosion-unprotected cathode-ray tube preheated to 60°C, through an opening provided in a tape attached to the side of the cathode-ray tube, said cathode-ray tube being a 51 cm (20-inch) cathode-ray tube having the structure shown in the attached drawing and equipped with front glass. After the pouring of the resin composition, the cathode-ray tube was allowed to stand in an electric oven at 60°C for 1 hour to cure the resin.

When the cathode-ray tube was taken out of the oven, cooled to room temperature, and then operated, neither striped pattern nor luminant spot was observed, and no peeling-off occurred.

Neither cure distortion nor peeling-off occurred also when this treated cathode-ray tube was allowed to stand at 150°C for 48 hours and then operated. Even after it was allowed to stand under the circumstances of 85°C and 90% R.H. for 72 hours, neither cure distortion nor peeling-off were observed.

Example 15

The same unsaturated polyester resin composition incorporated with cobalt octenoate and methyl ethyl ketone peroxide as used in Example 14 was injected into an explosion-unprotected cathode-ray tube at room temperature in the same manner as in Example 14, after which the cathode-ray tube was allowed to stand in an electric oven at 80°C for 2 hours to cure the resin.

When the cathode-ray tube was taken out of the oven, cooled to room temperature, and then operated, no cure distortion was observed.

As is evident from the results shown in Tables 3 and 4 and Examples 14 and 15, when at least one member selected from the group consisting of monoesters and diesters of unsaturated dibasic acids is used as the polymerizable unsaturated compound, the unsaturated polyester resin composition according to this invention is advantageous in that it can greatly reduce cure distortion at the time of curing caused in conventional unsaturated polyester resin compositions, forms no crack, is excellent in adhesion to a glass plate, and causes no peeling-off.

Examples 16, 17 and 18

Into a 3-liter four-necked flask equipped with a stirring rod, condenser, nitrogen gas inlet tube and thermometer were charged the following ingredients:

| | |
|---|---|
| diethylene glycol | 1,166 parts |
| adipic acid | 584 parts |
| phthalic anhydride | 740 parts |
| fumaric acid | 116 parts. |

While introducing nitrogen gas slowly into the flask, the temperature was raised to 150°C over a period of 1.5 hours by using a mantle heater. Further, the temperature was raised to 200°C over a period of 4 hours and maintained at this temperature. An unsaturated polyester ($A_4$) having an acid value of 34 was obtained in about 10 hours. Further, the temperature was lowered to 100°C, and 0.3 part of hydroquinone was added as a polymerization inhibitor, after which the unsaturated polyester ($A_4$) incorporated with hydroquinone was poured into a stainless-steel vat and allowed to stand to be cooled to room temperature. The unsaturated polyester ($A_4$) thus obtained had a molecular weight of 2,440 per mole of unsaturated group.

This unsaturated polyester was dissolved in a mixed solution of styrene and methyl methacrylate according to the recipes shown in Table 5.

To 200 parts of each of the unsaturated polyester resin compositions thus obtained were added 0.1 part of cobalt octenoate (manufactured by Dainippon Ink and Chemicals, Inc., metal content 6% by weight) and 2 parts of methyl ethyl ketone peroxide (manufactured by Nippon Oils and Fats Co., Ltd.).

On the other hand, on a 3 mm (thickness) × 250 mm × 250 mm, transparent, flat glass plate was placed, as a spacer, a silicone plate prepared by cutting the inner part in a size of 240 mm × 240 mm out of 3 mm (thickness) × 250 mm × 250 mm silicone plate with a razor so as leave the peripheral part, and then providing a slit in one place in the remaining peripheral part. A 3 mm (thickness) × 250 mm × 250 mm, transparent, flat glass plate was placed on the spacer, and the two glass plates were fastened to each other with clamps to obtain a casting mold. The unsaturated polyester resin composition described above was injected through the slit inlet of the spacer in the casting mold.

Thereafter, the casting mold was allowed to stand in an electric oven at 80°C for 30 minutes to cure the resin, whereby an unsaturated polyester resin casted plate was obtained.

Characteristics of the casted plates thus obtained are shown in Table 5.

As Comparative Example 7, compositions were prepared according to recipes shown in Table 5 by using the aforesaid unsaturated polyester ($A_4$) in Examples 16, 17 and 18, and characteristics of casted plates were evaluated in the same manner as described above.

In the case of Examples 16, 17 and 18, no cure distortion at the time of curing occurred, and neither striped pattern nor luminant spot was observed.

However, in the case of Comparative Example 7, no striped pattern was observed, but luminant spots appeared.

In Table 5, cure distortion was visually observed: the existence of a striped pattern was investigated, and the number of luminant spots was reckoned (the same applied to Table 6).

Table 5

| | | Example 16 | Example 17 | Example 18 | Comparative Example 7 |
|---|---|---|---|---|---|
| Recipe (part) | Unsaturated polyester ($A_4$) | 100 | 100 | 100 | 100 |
| | Styrene | 30 | 25 | 5 | 30 |
| | Methyl methacrylate | 5 | 15 | 30 | - |
| Number of moles (mole) | (a) | 0.043 | 0.043 | 0.043 | 0.043 |
| | (b) | 0.289 | 0.240 | 0.048 | 0.289 |
| | (c) | 0.051 | 0.152 | 0.303 | - |
| | (b)/((a) + (c)) | 3.1 | 1.2 | 0.14 | 6.7 |
| Cure dis-tor-tion | Striped pattern | None | None | None | None |
| | Luminant spots | None | None | None | About 100 |

Examples 19, 20 and 21

Into a 3-liter four-necked flask equipped with the same devices as in Example 16 were charged the following ingredients:

| | |
|---|---|
| dipropylene glycol | 1,474 parts |
| adipic acid | 1,241 parts |
| maleic anhydride | 147 parts. |

While introducing nitrogen gas slowly into the flask, the temperature was raised to 150°C over a period of 1 hour by using a mantle heater. Further, the temperature was raised to 200°C over a period of 4 hours and maintained at this temperature. After 12 hours, an unsaturated polyester ($B_4$) having an acid value of 25 was obtained.

Further, the temperature was lowered to 100°C, 0.3 part of hydroquinone was added as a polymerization initiator, after which the unsaturated polyester ($B_4$) incorporated with hydroquinone was poured into a stainless-steel vat and allowed to stand to be cooled to room temperature.

The unsaturated polyester ($B_4$) thus obtained had a molecular weight of 1,710 per mole of unsaturated group.

This unsaturated polyester was dissolved in a mixed solution of styrene and butyl acrylate according to the recipes shown in Table 6.

In Table 6 are shown characteristics of casted plates obtained by using each of the unsaturated polyester resin compositions thus obtained, in the same manner as in Example 16.

In Examples 19, 20 and 21, no cure distortion was observed.

Table 6

| | | Example 19 | Example 20 | Example 21 |
|---|---|---|---|---|
| Recipe (mole) | Unsaturated polyester ($B_4$) | 100 | 100 | 100 |
| | Styrene | 30 | 25 | 10 |
| | Butyl acrylate | 5 | 15 | 25 |
| Number of moles (mole) | (a) | 0.059 | 0.059 | 0.059 |
| | (b) | 0.288 | 0.240 | 0.096 |
| | (c) | 0.039 | 0.117 | 0.195 |
| | (b)/{(a) + (c)} | 2.9 | 1.4 | 0.40 |
| Cure distortion | Striped pattern | None | None | None |
| | Luminant spots | None | None | None |

As is evident from the results shown in Tables 5 and 6, when at least one member selected from the group consisting of acrylic acid, methacrylic acid and their derivatives is used as the polymerizable unsaturated compound, the unsaturated polyester resin composition of this invention greatly reduces cure distortion at the time of curing, particularly luminant spots, which occurs in conventional unsaturated polyester resin composition, and hence it is suitable as a resin composition for treating cathode-ray tube.

**Claims**

1. A liquid unsaturated polyester resin composition for treating cathode-ray tubes comprising
(I) an unsaturated polyester obtained by reacting an acid component comprising as its main constituent an unsaturated dibasic acid and/or an acid anhydride thereof with an alcohol component and having a molecular weight of 500 to 8000 per mole of unsaturated group,
(II) a styrene monomer and/or a derivative thereof, and
(III) at least one polymerisable unsaturated compound selected from
(i) acrylonitrile, itaconic acid or citraconic anhydride,
(ii) monoesters or diesters of unsaturated dibasic acids, or
(iii) acrylic acid, methacrylic acid or their derivatives;
component (I) being dissolved in components (II) and (III) in amounts such that

$$(b)/\{(a) + (c)\} = 1/10 \text{ to } 10/1$$

wherein (a) is the number of moles of unsaturated groups in the component (I); (b) is the number of moles of unsaturated groups in the component (II); and (c) is the number of moles of unsaturated groups in the component (III).

2. A composition according to claim 1, wherein the polymerisable unsaturated compound is at least one of acrylonitrile, itaconic acid and citraconic anhydride.

3. A composition according to claim 1, wherein the polymerisable unsaturated compound is at least one monoester or diester of an unsaturated dibasic acid.

4. A composition according to claim 1, wherein the polymerisable unsaturated compound is at least one of acrylic acid, methacrylic acid and their derivatives.

5. A composition according to any one of the preceding claims, wherein the acid component for preparing the unsaturated polyester is one or more unsaturated dibasic acids and/or acid anhydrides thereof and one or more polybasic acids.

6. A composition according to claim 3, wherein the acid component for preparing the unsaturated polyester is one or more unsaturated dibasic acids and/or acid anhydrides thereof, and 3,6-endomethylene-1,2,3,6-tetrahydrophthalic anhydride or 3,6-endomethylene-1,2,3,6-tetrahydrophthalic acid.

7. A composition according to any one of preceding claims, wherein component (III) is at least one polymerisable unsaturated compound selected from acrylonitrile, itaconic acid or citraconic anhydride and the ratio (b)/{(a) + (c)} is 5/10 to 10/1.

**Patentansprüche**

1. Flüssige ungesättigte Polyester-Harzmasse zur Behandlung von Kathodenstrahlröhren, dadurch gekennzeichnet, daß sie
(I) einen ungesättigten Polyester, erhalten durch Umsetzung einer Säurekomponente, die als Hauptbestandteil eine ungesättigte zweibasische Säure und/oder ein Säureanhydrid davon enthält, mit einer Alkoholkomponente, und der ein Molekulargewicht von 500 bis 8000 pro mol ungesättigte Gruppe aufweist,
(II) ein Styrol-Monomeres und/oder ein Derivat davon und
(III) mindestens eine polymerisierbare ungesättigte Verbindung, ausgewählt aus
(i) Acrylnitril, Itaconsäure oder Citraconsäureanhydrid,
(ii) Monoestern oder Diestern von ungesättigten zweibasischen Säuren oder
(iii) Acrylsäure, Methacrylsäure oder ihren Derivaten,
enthält, wobei die Komponente (I) in den Komponenten (II) und (III) in solchen Mengen aufgelöst ist, daß der Bedingung

$$(b)/\{(a) + (c)\} = 1:10 \text{ bis } 10:1$$

genügt wird, worin (a) die Anzahl der mole der ungesättigten Gruppen in der Komponente (I); (b) die Anzahl der mole der ungesättigten Gruppen in der Komponenten (II); und (c) die Anzahl der mole der ungesättigten Gruppen in der Komponente (III) ist.

2. Masse nach Anspruch 1, dadurch gekennzeichnet, daß die polymerisierbare ungesättigte Verbindung mindestens eine von Acrylnitril, Itaconsäure und Citraconsäureanhydrid ist.

3. Masse nach Anspruch 1, dadurch gekennzeichnet, daß die polymerisierbare ungesättigte Verbindung mindestens ein Monoester oder Diester einer ungesättigten zweibasischen Säure ist.

4. Masse nach Anspruch 1, dadurch gekennzeichnet, daß die polymerisierbare ungesättigte Verbindung mindestens eine von Acrylsäure, Methacrylsäure und ihren Derivaten ist.

5. Masse nach einem der vorstehenden Ansprüche, dadurch gekennzeichnet, daß die Säurekomponente zur Herstellung des ungesättigten Polyesters eine oder mehrere ungesättigte zweibasische Säuren und/oder Säureanhydride davon und eine oder mehrere mehrbasische Säuren ist.

6. Masse nach Anspruch 3, dadurch gekennzeichnet, daß die Säurekomponente zur Herstellung des ungesättigten Polyesters eine oder mehrere ungesättigte zweibasische Säuren und/oder Säureanhydride davon und 3,6-Endomethylen-1,2,3,6-tetrahydrophthalsäureanhydrid oder 3,6-Endomethylen-1,2,3,6-tetrahydrophthalsäure ist.

7. Masse nach einem der vorstehenden Ansprüche, dadurch gekennzeichnet, daß die Komponente (III) mindestens eine polymerisierbare ungesättigte Verbindung, ausgewählt aus Acrylnitril, Itaconsäure oder Citraconsäureanhydrid, ist und daß das Verhältnis (b)/{(a) + (c)} 5:10 bis 10:1 ist.

**Revendications**

1. Composition liquide de résine de polyester insaturé pour le traitement de tubes à rayons cathodiques, comprenant

(I) un polyester insaturé obtenu par réaction d'un composant acide comprenant, en tant que constituant principal, un diacide insaturé et/ou un anhydride d'un tel acide, avec un composant alcool et présentant une masse moléculaire de 500 à 8000 par mole de groupes insaturés,

(II) le monomère styrène et/ou l'un de ses dérivés, et

(III) au moins un composé insaturé polymérisable, choisi parmi

(i) l'acrylonitrile, l'acide itaconique ou l'anhydride citraconique,

(ii) les monoesters ou diesters de diacides insaturés, ou

(iii) l'acide acrylique, l'acide métacrylique ou leurs dérivés;

le composant (I) étant dissous dans les composants (II) et (III), en des proportions telles que

$$(b)/((a) + (c)) = 1/10 \text{ à } 10/1$$

où (a) est le nombre de moles de groupes insaturés dans le composant (I); (b) est le nombre de moles de groupes insaturés dans le composant (II); et (c) est le nombre de moles de groupes insaturés dans le composant (III).

2. Composition conforme à la revendication 1, dans laquelle le composé insaturé polymérisable est au moins l'un des suivants: acrylonitrile, acide itaconique et anhydride citraconique.

3. Composition conforme à la revendication 1, dans laquelle le composé insaturé polymérisable est au moins un monoester ou un diester d'un diacide insaturé.

4. Composition conforme à la revendication 1, dans laquelle le composé insaturé polymérisable est au moins l'un des suivants: acide acrylique, acide méthacrylique et leurs dérivés.

5. Composition conforme à l'une quelconque des revendications précédentes, dans laquelle le composant acide pour la préparation du polyester insaturé est constitué d'un ou plusieurs diacide(s) insaturé(s) et/ou anhydrides de ceux-ci, et d'un ou plusieurs polyacide(s).

6. Composition conforme à la revendication 3, dans laquelle le composant acide pour la préparation du polyester insaturé est constitué d'un ou plusieurs diacide(s) insaturé(s) et/ou anhydrides de ceux-ci, et d'anhydride 3,6-endométhylène-1,2,3,6-tétrahydrophtalique ou d'acide 3,6-endométhylène-1,2,3,6-tétrahydrophtalique.

7. Composition conforme à l'une quelconque des revendications précédentes, dans laquelle le composant (III) est au moins un composé insaturé polymérisable choisi parmi l'acrylonitrile, l'acide itaconique ou l'anhydride citraconique, et le rapport (b)/((a) + (c)) vaut 5/10 à 10/1.

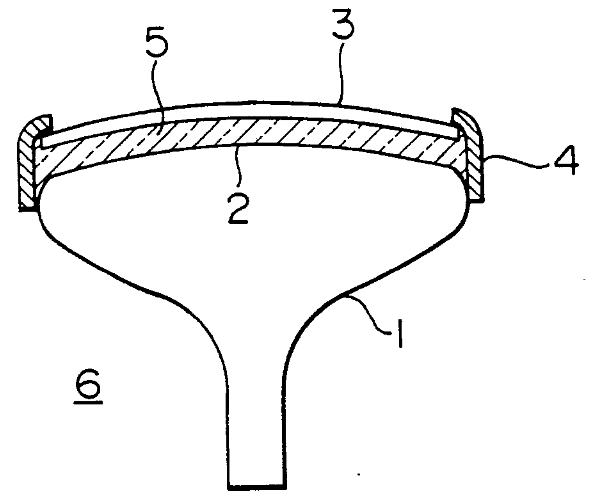
5
3
4
2
1
6